# EUROPEAN PATENT APPLICATION

(11) **EP 4 454 528 A1**
(43) Date of publication of application: **30.10.2024**
(21) Application number: 22927485.7
(22) Date of filing: 21.12.2022
(51) Int. Cl.: A47L 9/28, A47L 11/40, G05D 1/02, B25J 19/02, B25J 19/06, B25J 19/00, B25J 9/00, B25J 9/16

(54) **ROBOT CLEANER**

(30) Priority: 15.02.2022 KR 20220019660
(71) Applicant: SAMSUNG ELECTRONICS CO., LTD., Yeongtong-gu Suwon-si, Gyeonggi-do 16677 (KR)
(72) Inventor: NA, Woojin, Suwon-si Gyeonggi-do 16677 (KR); LEE, Wonmin, Suwon-si Gyeonggi-do 16677 (KR); KIM, Sinae, Suwon-si Gyeonggi-do 16677 (KR); KIM, Hyounsoo, Suwon-si Gyeonggi-do 16677 (KR); YUN, Minro, Suwon-si Gyeonggi-do 16677 (KR)
(74) Representative: Gulde & Partner
(86) International application number: PCT/KR2022/020974
(87) International publication number: WO 2023/158089

(57) **Abstract**

Disclosed herein is a robot cleaner including a sensor collision detector for detecting a collision of a sensor. The robot cleaner includes a cleaner main body configured to travel and clean a cleaning area, a sensor case disposed on the cleaner main body and configured to cover a sensor for detecting an obstacle in the cleaning area, and a sensor collision detector configured to detect an impact applied to the sensor, wherein the sensor collision detector includes a bumper movably connected to the sensor case, at least a portion of the bumper corresponding to an outer circumference of the sensor, a detecting portion interacting with the bumper to detect a collision of the sensor case, and wherein the bumper and the detecting portion are disposed on a lower side of the sensor.

## Description

### [Technical Field]

The disclosure relates to a robot cleaner, and more particularly, to a robot cleaner including a sensor collision detector for detecting a collision of sensors.

### [Background Art]

In general, a robot vacuum cleaner is a device that moves through a cleaning area and removes dust or the like from the floor without user intervention. The robot vacuum cleaner controls a drive device to thoroughly clean the cleaning area and controls a cleaning device to efficiently remove dust or the like.

The robot vacuum cleaner typically detects a distance to obstacles such as furniture, office equipment, and walls installed in the cleaning area using various sensors, and uses the detected information to map the cleaning area or perform motion movements, such as obstacle avoidance by controlling the drive device.

In other words, the robot vacuum cleaner uses a method that predicts a distance to be travelled and calculates and detects the distance to the obstacles based on the predicted distance. Recently, a number of cleaning robots are equipped with sensors that monitor the ceiling or floor, and based on the monitored information, the distance to obstacles is predicted and travelled. In addition, various sensor units, such as light detection and ranging (Lidar), using such technology are being developed and made available.

The method of measuring the distance travelled by the robot vacuum cleaner using a sensor that scans the ceiling or floor and calculating the distance to the obstacles based on the measured information has the problem that if the distance travelled by the robot vacuum cleaner is not accurately measured due to a curvature of the floor or the like, collision with obstacles occur and errors in the installed sensor are caused.

### [Disclosure]

### [Technical Problem]

One aspect of the present disclosure provides a robot vacuum cleaner comprising a sensor collision detector.

Further, one aspect of the disclosure provides a robot vacuum cleaner capable of actively performing obstacle avoidance.

Further, one aspect of the disclosure provides a robot vacuum cleaner comprising a sensor collision detector adaptable to various types of sensors.

Further one aspect of the disclosure provides a robot vacuum cleaner capable of detecting an obstacle colliding with a sensor while travelling and clearly determining the situation of the obstacle.

### [Technical Solution]

According to one aspect of the present disclosure, a robot cleaner including a cleaner main body configured to travel and clean a cleaning area, a sensor case disposed on the cleaner main body and configured to cover a sensor for detecting an obstacle in the cleaning area, and a sensor collision detector configured to detect an impact applied to the sensor, wherein the sensor collision detector includes a bumper movably connected to the sensor case, at least a portion of the bumper corresponding to an outer circumference of the sensor, a detecting portion interacting with the bumper to detect a collision of the sensor case, and wherein the bumper and the detecting portion are disposed on a lower side of the sensor.

The sensor collision detector may further include a sensor holder to support the sensor, and the bumper and the detecting portion may be disposed on a lower surface of the sensor holder.

The bumper and the detecting portion may be arranged in the same line on a lower portion of the sensor holder.

The sensor collision detector may further include a link member connecting the sensor case and the bumper such that the sensor case and the bumper are interlocked with each other in the event of a collision with an obstacle, and the link member may include at least one link arranged to be spaced apart in a circumferential direction of the sensor case.

The sensor collision detector may further include a bumper connection portion disposed on the link so as to connect the bumper, and a link connection portion disposed on the bumper to correspond to the bumper connection portion.

The sensor collision detector may further include an elastic member that provides tension to allow the bumper to return to its original position.

The detecting portion may include a pair of a first switch and a second switch arranged to face each other and spaced apart from each other at a predetermined angle so as to be in contact with at least a portion of the bumper, the first switch and the second switch having first and second terminals, respectively, on opposite surfaces facing each other and contactable with each other.

The bumper may include a bumper body formed to correspond to an outer circumference of the sensor case, and a contact portion, as at least a portion of the bumper body, disposed between the first switch and the second switch, and configured to contact each first terminal by pressing each second terminal.

The sensor collision detector may further include a fixing member configured to be movably coupled to the sensor holder, wherein the fixing member may include a first fixing member on which the bumper is seated, and a second fixing member securing the first fixing member to the sensor holder.

A gap may be disposed between the bumper and the lower surface of the sensor holder.

The sensor holder may further include a coupling portion disposed on the lower surface of the sensor holder to allow the fixing member to be coupled to the sensor holder, wherein the coupling portion includes a coupling protrusion to couple the bumper and the first fixing member, and a coupling groove formed on the coupling protrusion to enable the second fixing member to be coupled thereto.

The bumper may further include a coupling hole formed corresponding to the coupling portion to enable the fixing member to be coupled thereto, and the coupling hole may be formed in an elliptical shape.

The sensor holder may further include an elastic member installation portion disposed on the lower surface of the sensor holder to allow the elastic member to be coupled thereto.

The bumper may further include an elastic member support portion disposed to be spaced apart from the elastic member installation portion to support the elastic member.

According to one aspect of the present disclosure, a robot cleaner including a cleaner main body configured to travel and clean a cleaning area, a sensor case disposed on the cleaner main body and configured to cover a sensor for detecting an obstacle in the cleaning area, and a sensor collision detector configured to detect an impact applied to the sensor, wherein the sensor collision detector includes a sensor holder configured to support the sensor from an inner side of the sensor case, a bumper connected to the sensor case with a relatively movable, at least a portion of the bumper formed to correspond to an outer circumference of the sensor, a detecting portion interacting with the bumper to detect a collision of the sensor case, and wherein the bumper and the detecting portion are disposed on a lower portion of the sensor.

The sensor collision detector may further include a link member connecting the sensor case and the bumper such that the sensor case and the bumper are interlocked with each other in the event of a collision with an obstacle, and the link member may include at least one link arranged to be spaced apart in a circumferential direction of the sensor case.

The sensor collision detector may further include a bumper connection portion disposed on the link so as to connect the bumper, and a link connection portion disposed on the bumper to correspond to the bumper connection portion.

The sensor collision detector may further include an elastic member that provides tension to allow the bumper to return to its original position.

The detecting portion may include a pair of a first switch and a second switch arranged to face each other and spaced apart from each other at a predetermined angle so as to be in contact with at least a portion of the bumper, the first switch and the second switch having first and second terminals, respectively, on opposite surfaces facing each other and contactable with each other.

The bumper may include a bumper body formed to correspond to an outer circumference of the sensor case, a contact portion, as at least a portion of the bumper body, disposed between the first switch and the second switch and configured to contact each first terminal by pressing each second terminal, and an elastic member support portion spaced apart from an elastic member installation portion to support the elastic member.

### [Advantageous Effects]

Various aspects of the present disclosure may provide the robot vacuum cleaner including the sensor collision detector.

Further, various aspects of the present disclosure may provide the robot vacuum cleaner capable of actively performing obstacle avoidance.

Further, various aspects of the present disclosure may provide the robot vacuum cleaner including the collision detection device adaptable to various types of sensors.

### [Description of Drawings]

FIG. 1 is a perspective view schematically illustrating a robot vacuum cleaner, according to an embodiment.
FIG. 2 is a perspective view of a bottom side of the robot vacuum cleaner shown in FIG. 1.
FIG. 3 is an exploded view of a sensor module of the robot vacuum cleaner shown in FIG. 1.
FIG. 4 is a side view of the sensor module of FIG. 3.
FIG. 5 is a perspective view illustrating the sensor module equipped with a sensor collision detector, according to an embodiment.
FIG. 6 is an exploded perspective view illustrating the sensor module equipped with the sensor collision detector shown in FIG. 5.
FIG. 7 is an exploded perspective view illustrating the sensor module equipped with the sensor collision detector shown in FIG. 5 from the bottom.
FIG. 8 is a cross-sectional view of portion A-A' of the sensor collision detector of the sensor module shown in FIG. 5.
FIG. 9 is a partial perspective cross-sectional view illustrating the sensor collision detector according to an embodiment.
FIG. 10 is an enlarged view of portion B of FIG. 8.
FIG. 11 is a view illustrating a pre-operational state of the sensor collision detector according to an embodiment.
FIG. 12 is a view illustrating a state of the sensor collision detector in a frontal collision of the sensor module according to an embodiment.
FIG. 13 is a view illustrating a state of the sensor collision detector in a left-side collision of the sensor module according to an embodiment.
FIG. 14 is a view illustrating a state of the sensor collision detector in a right-side collision of the sensor module according to an embodiment.
FIG. 15 is a perspective view of a sensor module equipped with a sensor collision detector according to another embodiment.
FIG. 16 is an exploded perspective view illustrating the sensor module equipped with the sensor collision detector shown in FIG. 15.
FIG. 17 is an exploded perspective view of the sensor module with sensor collision detector shown in FIG. 15 from the bottom.
FIG. 18 is a cross-sectional view of portion B-B' of the sensor collision detector shown in FIG. 15.
FIG. 19 is a view of the sensor module with the sensor collision detector shown in FIG. 15.
FIG. 20 is a partial cross-sectional view schematically illustrating a sensing portion of the sensor collision detector shown in FIG. 15.
FIG. 21 is a cross-sectional view of portion C - C' of the sensor collision detector shown in FIG. 15.

### [Modes of the Invention]

Embodiments described in the disclosure and configurations shown in the drawings are merely examples of the embodiments of the disclosure and may be modified in various different ways at the time of filing of the present application to replace the embodiments and drawings of the disclosure.

In addition, the same reference numerals or signs shown in the drawings of the disclosure indicate elements or components performing substantially the same function.

Also, the terms used herein are used to describe the embodiments and are not intended to limit and/or restrict the disclosure. The singular forms "a," "an" and "the" are intended to include the plural forms as well, unless the context clearly indicates otherwise. In this disclosure, the terms "including", "having", and the like are used to specify features, figures, steps, operations, elements, components, or combinations thereof, but do not preclude the presence or addition of one or more of the features, figures, steps, operations, elements, components, or combinations thereof.

It will be understood that, although the terms "first", "second", "primary", "secondary", etc., may be used herein to describe various elements, but elements are not limited by these terms. These terms are only used to distinguish one element from another element. For example, without departing from the scope of the disclosure, a first element may be termed as a second element, and a second element may be termed as a first element. The term of "and/or" includes a plurality of combinations of relevant items or any one item among a plurality of relevant items.

In addition, as used in the following description, the terms "front end", "rear end", "top", "bottom", "top" and "bottom" are defined with reference to the drawings and are not intended to limit the shape and position of each component.

Hereinafter, one or more embodiments will be described in detail with reference to the accompanying drawings.

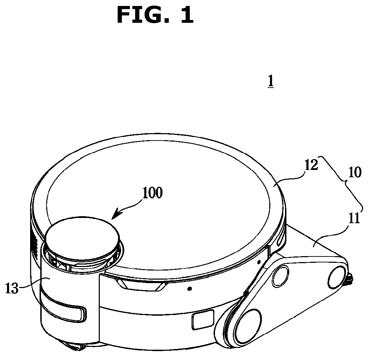

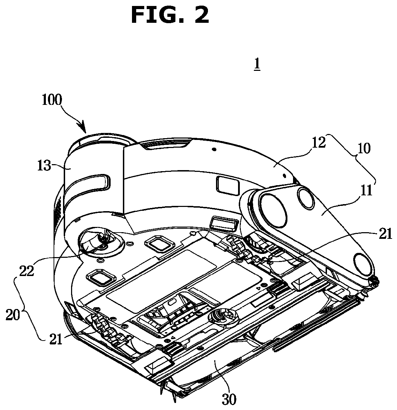

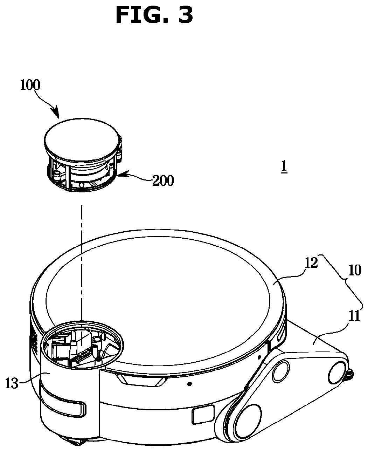

FIG. 1 is a perspective view schematically showing a robot vacuum cleaner according to an embodiment, FIG. 2 is a perspective view showing a bottom side of the robot vacuum cleaner shown in FIG. 1, and FIG. 3 is an exploded view of a sensor module of the robot vacuum cleaner shown in FIG. 1.

As shown in FIGS. 1 to 3, a robot vacuum cleaner 1 (hereinafter referred to as a robot cleaner) may include a cleaner main body 10 and a sensor module 100 to enable the robot cleaner 1 to move in a cleaning area and perform cleaning.

The cleaner main body 10 may include a first case 11 that generates an intake force and draws in dust from the cleaning area, and a second case 12 that is provided to cover an upper portion of the first case 11.

The first case 11 may include a wheel 20 provided to run through the cleaning area, a dust collection portion 30 provided to absorb dust from the cleaning area, and a sensor installation portion 13 on which the sensor module 100 is installed. The first case 11 may further include a motor (not shown) provided to generate an intake force for drawing dust in the cleaning area.

The wheel 20 may include two main wheels 21 for moving through the cleaning area. The wheel 20 may further include at least one auxiliary wheel 22 for stable movement of the cleaner main body 10.

The dust collection portion 30 may collect dust in the cleaning area into the cleaner main body 10 by the intake force.

The second case 12 may be coupled to an upper side of the first case 11. The second case 12 may be coupled the first case 11 and may be equipped with a motor or the like on an inner side.

The first case 11 and the second case 12 may be provided with the sensor installation portion 13 for installing the sensor module 100. In one embodiment, the sensor installation portion is shown to be provided by the first case and the second case as an example, but the spirit of the present disclosure is not limited thereto. For example, the sensor installation portion may be provided by the first case and/or the second case, respectively.

The sensor module 100 may be accommodated in the sensor installation portion 13 of the cleaner main body 10. The sensor module 100 may be configured to detect a location of an obstacle, a distance to/from/with an obstacle, and the like.

The sensor module 100 may be installed within the sensor installation portion 13. The sensor module 100 may be configured to detect a location of an obstacle, a distance to the obstacle, and the like while the robot cleaner 1 is travelling for cleaning.

The sensor module 100 may be arranged to protrude upwardly from the cleaner main body 10. The sensor module 100 may be arranged to protrude upwardly from the first case 11. The sensor module 100 may be arranged to protrude from an upper surface of the cleaner main body 10. The sensor module 100 may detect a collision by a sensor collision detector 200. In one embodiment, the sensor module is shown as an example to protrude upwardly from the cleaner main body in order to perform an obstacle detection operation in a travelling state of the robot cleaner, but the spirit of the present disclosure is not limited thereto. For example, the sensor module may be configured to be movable up and down from the cleaner main body, or rotatable or horizontally movable.

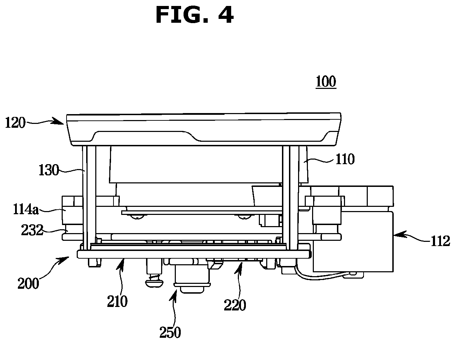

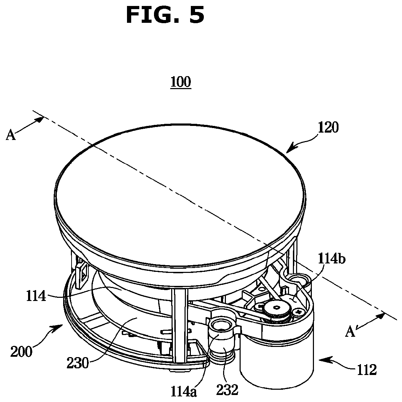

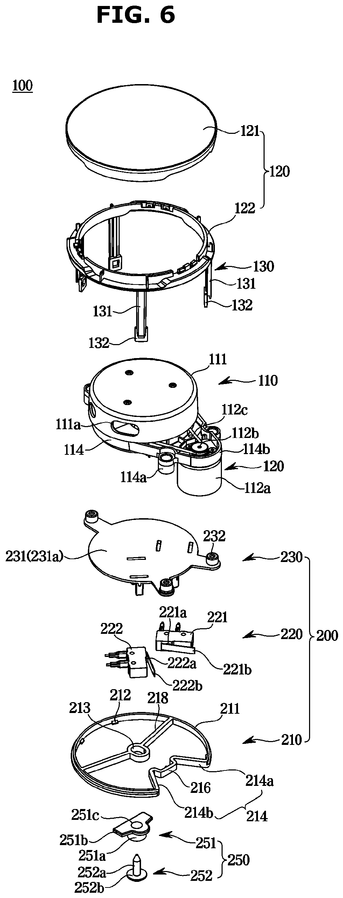

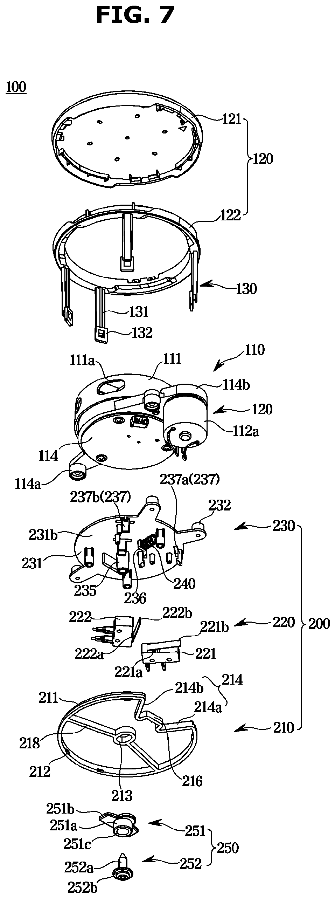

FIG. 4 is a side view of the sensor module of FIG. 3, FIG. 5 is a perspective view showing the sensor module equipped with the sensor collision detector, according to an embodiment, FIG. 6 is an exploded perspective view showing the sensor module equipped with the sensor collision detector shown in FIG. 5, and FIG. 7 is an exploded perspective view showing the sensor module equipped with the sensor collision detector shown in FIG. 5 from below. In the following, descriptions redundant to the above are omitted.

As shown in FIGS. 4 to 7, the robot cleaner 1 may include the sensor module 100 and the sensor collision detector 200.

The sensor module 100 may include a sensor 110 and a sensor case 120 provided to cover the sensor 110.

The sensor 110 may emit infrared light, laser light, or ultrasonic waves into the cleaning area, and may detect the distance to the obstacle, the location of the obstacle, and the like by using infrared light that strikes the obstacle and is reflected back. Although not shown in the drawings, the sensor 110 may include a light source that emits light and an image receiver that receives light reflected from the emitted light striking the obstacle. The light source may include a light emitter that emits infrared or visible light, such as a light emitting diode (LED) that emits infrared or visible light, or a light emitter that emits laser light. The image receiver may be an array of a plurality of unit pixels arranged in a matrix, wherein each unit pixel may be implemented with a variety of light receiving elements, such as a cadmium sulfide (CdS) cell, a photodiode, a phototransistor, and the like.

The sensor 110 may be formed in a cylindrical shape. The sensor 110 may emit light and receive light that is returned after the emitted light strikes an obstacle, thereby obtaining obstacle situation information, such as the location of the obstacle and the distance to the obstacle. The obstacle situation information thus obtained may be reflected in the movement of the robot cleaner 1.

The sensor 110 may include a sensor body 111 having a cylindrical shape and a sensing portion (not shown) provided inside the sensor body 111. At least a portion of the sensor body 111 may be provided with a sensing opening 111a to allow the light emitted from the sensor 110 and the light returning after striking the obstacle to pass through smoothly. At least one of the sensing openings 111a may be formed on one side of the sensor body 111. The sensing opening 111a may be formed to be open along a circumferential direction.

The sensor module 100 may further include a drive portion 112 for making the sensor 110 rotatable. The drive portion 112 may include a motor 112a and a belt 112c connected to a motor shaft 112b to rotate the sensor 110. The belt 112c may be arranged to connect the sensor 110 and the motor 112a.

The sensor 110 may include a sensor bracket 114 provided to accommodate a lower portion of the sensor body 111. The sensor bracket 114 may be arranged such that the sensor 110 may be rotatably coupled thereto. One side of the sensor bracket 114 may be provided with a drive installation portion 114b for installing the drive portion 112. The drive installation portion 114b may be arranged to extend from one side of the sensor bracket 114. The sensor bracket 114 may be provided with holder body fixing portions 114a to allow the sensor 110 to be supported on a sensor holder 230 of the sensor collision detector 200, which will be described later. The holder body fixing portions 114a may be formed to protrude downwardly from the sensor bracket 114. The holder body fixing portions 114a may be formed to extend from at least a portion of the sensor bracket 114.

The drive installation portion 114b may be configured to allow the motor 112a and the belt 112c connected to the motor shaft 112b to be connected to the sensor 110. In the present embodiment, the drive installation portion is shown as an example of being disposed on an outer side of the sensor body, but the present disclosure is not limited thereto. For example, a drive portion for rotating the sensor may be disposed on an inner side of the sensor body and/or the sensor bracket.

The sensor 110 may be covered by the sensor case 120. The sensor 110 may be located on an inner side of the sensor case 120.

The sensor case 120 may be arranged on the cleaner main body 10 to cover the sensor 110, which is arranged to detect obstacles in the cleaning area. The sensor case 120 may be arranged in the sensor installation portion 13 of the cleaner main body 10. The sensor case 120 may be arranged in a shape corresponding to the sensor installation portion 13.

The sensor case 120 may include a first sensor case 121 covering an upper portion of the sensor 110, and a second sensor case 122 coupled to the first sensor case 121. The first sensor case 121 may be provided in a plate shape to cover an upper surface of the sensor 110. The second sensor case 12 may be provided in a ring shape to be coupled to the first sensor case 121. In one embodiment, the first sensor case and the second sensor case are prepared separately and coupled together, but the present disclosure is not limited thereto. For example, the first case and the second case may be integrally formed.

The second sensor case (hereinafter referred to as the sensor case) may be provided with a link member 130 for connecting the sensor collision detector 200 and the sensor case 120 described later.

The sensor collision detector 200 may be disposed on a lower portion of the sensor 110. The sensor collision detector 200 may be connected to the sensor case 120 via the link member 130. The link member 130 may be configured to extend integrally with the sensor case 120. When the sensor case 120 collides with an obstacle, the sensor collision detector 200 may detect the collision via the link member 130.

The sensor collision detector 200 may include the sensor holder 230 arranged to support the sensor 110, a bumper 210, and a detecting portion 220 that detects a collision of the sensor 110 in conjunction with the bumper 210.

The sensor holder 230 may be arranged to support the sensor 110. The sensor holder 230 may be formed as a disc to correspond to the sensor 110. The sensor holder 230 may include a holder body 231 having a disc shape. The holder body 231 may be provided with bracket fixing portions 232 protruding upward to enable the sensor bracket 114 to be coupled thereto. The bracket fixing portions 232 may be arranged to correspond to the holder body fixing portion 114a of the sensor bracket 114. The sensor bracket 114 may be fixed to the sensor holder 230 through the bracket fixing portions 232 and the holder body fixing portions 114a, so that the sensor holder 230 may support the sensor 110. The sensor bracket 114 and the sensor holder 230 may be coupled by bolts 160 or the like.

The sensor holder 230 may include a first surface 231a provided in a direction of the sensor 110 and a second surface 231b on the opposite side. The first surface 231a may be an upper surface of the sensor body 111, and the second surface 231b may be the same as the lower surface of the sensor holder 230. The bracket fixing portion 232 may be formed to protrude from the first surface 231a of the holder body.

The sensor holder 230 may be arranged to support the sensor 110 on the first surface 231a. At least a portion of the sensor collision detector 200 may be installed on the second surface 231b of the sensor holder 230. The bumper 210 and the detection portion 220 of the sensor collision detector 200 may be installed on the second surface 231b of the sensor holder 230.

The sensor holder 230 may further include a coupling portion 235 for installing the bumper 210. The sensor holder 230 may further include an elastic member installation portion 236 and a switch installation portion 237 for installing the detecting portion 220. The coupling portion 235 for installing the bumper 210 may be arranged on the second surface 231b of the sensor holder 230. The elastic member installation portion 236 and the switch installation portion 237 for installing the detecting portion 220 may be arranged on the second surface 231b of the sensor holder 230.

A fixing member 250 provided for movably installing the bumper 210 may be coupled to the coupling portion 235 of the sensor holder 230. The specific configuration of the fixing member 250 will be described later.

The sensor collision detector 200 may further include the bumper 210. The bumper 210 may be provided to actuate the detecting portion 220 in conjunction with the sensor case 120 when the sensor 110 and the sensor case 120 covering the sensor 110 collide with an obstacle while the robot cleaner 1 is travelling.

The bumper 210 may be arranged to correspond to an outer circumference of the sensor case 120. The bumper 210 may be arranged to correspond to an outer circumference of the sensor holder 230. The bumper 210 may be connected to the sensor case 120 so as to be relatively movable.

The bumper 210 may be formed in a substantially annular shape. The bumper 210 may be arranged to be disposed within the maximum outer diameter of the sensor 110. The bumper 210 may be disposed on a lower side of the sensor holder 230 and may be arranged to be disposed within the maximum outer diameter of the sensor holder 230.

The bumper 210 may include a bumper body 211 having a substantially annular shape. The bumper body 211 may be at least partially circular in shape and may be arranged to be disposed within the maximum outer diameter of the sensor 110.

The bumper 210 may be connected to the sensor case 120 at a lower portion of the sensor holder 230 through the link member 130. A bumper connection portion 132 for connection to the bumper 210 may be provided at a lower end of a link 131 of the link member 130 in the sensor case 120.

The bumper 210 may be provided with link connection portions 212 corresponding to the bumper connection portions 132 of the link 131. The link connection portions 212 may each be formed to protrude from an inner circumferential surface of the bumper 210. The link connection portion 212 may be formed integrally with an inner circumferential surface of the bumper body 211. The link connection portions 212 may be formed in numbers corresponding to positions corresponding to the links 131. The link connection portions 212 may interactively couple the bumper 210 to the sensor case 120. In one embodiment, the bumper connection portions are shown as an example of being formed as holes and the link connection portions are formed as protrusions, but the spirit of the present disclosure is not limited thereto. The link connection portions may be configured to movably connect the bumper to the sensor case.

The bumper 210 may further include a coupling hole 213 arranged to be coupled to the sensor holder 230. The bumper 210 may include the coupling hole 213 to be movably coupled to the sensor holder 230. The coupling hole 213 may be provided at the center of the bumper 210. The coupling hole 213 may be provided at the center of the bumper body 211. The coupling hole 213 may be provided to correspond to the coupling portion 235 of the sensor holder 230. The coupling hole 213 may be provided in a rectangular shape to allow the bumper 210 to move. The coupling hole 213 may be formed in an elliptical shape. The bumper 210 may further include connecting ribs 218 extending to an inner side of the bumper body 211. The connecting ribs 218 may be arranged to connect the bumper body 211 and the coupling hole 213. The connection ribs 218 may be formed by extending on the left and right sides, respectively, through the coupling hole 213 provided at the center of the bumper 210. The connecting ribs 218 may be arranged to allow the bumper 210 to move more stably. The connecting ribs 218 may be configured to increase the strength of the bumper 210.

The bumper 210 may further include, as at least a portion of the bumper body 211, a contact portion 214 on which an elastic member 240 and/or the detecting portion 220 are installed. The contact portion 214 of the bumper 210 may be provided by extending at least a portion of the bumper body 211 toward the center.

The contact portion 214 arranged on the bumper 210 may be arranged between a first switch 221 and a second switch 222 of the detecting portion 220, which will be described later, to detect a collision between the sensor case 120 and an obstacle and transmit the detected information to the robot cleaner 1.

The sensor collision detector 200 may further include the elastic member 240 that provides tension to return the bumper 210 to its original position. The elastic member 240 may include a spring.

The elastic member 240 may be installed in the elastic member installation portion 236 of the sensor holder 230. The elastic member 240 may be arranged to fit into the elastic member installation portion 236 on one side and elastically support the bumper 210 on the other side.

The bumper 210 may be provided with an elastic member support portion 216 that is provided to be flat to support the elastic member 240. The elastic member support portion 216 may be provided near the contact portion 214 of the bumper 210.

The elastic member 240 may be arranged to elastically support between the sensor holder 230 and the bumper 210 so that the sensor case 120 and the bumper 210 may move and return to their original positions after colliding with an obstacle

The sensor collision detector 200 may further include the detecting portion 220 arranged to interact with the bumper 210.

The detecting portion 220 may include the first switch 221 and the second switch 222 arranged to face each other and spaced apart from each other at a predetermined angle so as to be in contact with at least a portion of the bumper 210. The first switch 221 and the second switch 222 may have first terminals 221a and 222a and second terminals 221b and 222b, respectively, on opposite surfaces facing each other and contactable with each other.

The sensor holder 230 may further include the switch installation portion 237 on which the first switch and the second switch 222 are mountable. The switch installation portion 237 may be provided on the second surface 231b of the sensor holder 230. The switch installation portions 237 may be spaced apart to face each other at an inclined angle. The switch installation portions 237 may include a first switch installation portion 237 for installing the first switch 221 and a second switch installation portion 237 for installing the second switch 222. Each of the first switch installation portion 237 and the second switch installation portion 237 may include a pair of hooks arranged to face each other. The pair of hooks of the first switch installation portion 237 may be arranged to secure a first side and a second side of the first switch 221. The pair of hooks of the second switch installation portion 237 may be arranged to secure a first side and a second side of the second switch 222.

The contact portion 214 of the bumper 210 may be configured to correspond to the first switch 221 and the second switch 222 of the detecting portion 220, respectively. In particular, the contact portion 214 of the bumper 210 may include a first contact portion 214a and a second contact portion 214b that are arranged to correspond to the first switch 221 and the second switch 222, respectively. The first contact portion 214a of the bumper 210 may be arranged to correspond to the first switch 221 of the detecting portion 220. The second contact portion 214b of the bumper 210 may be arranged to correspond to the second switch 222 of the detecting portion 220. The first contact portion 214a of the bumper 210 may be configured to contact and/or press the second terminal 221b of the first switch 221. The second contact portion 214b of the bumper 210 may be configured to contact and/or press the second terminal 222b of the second switch 222.

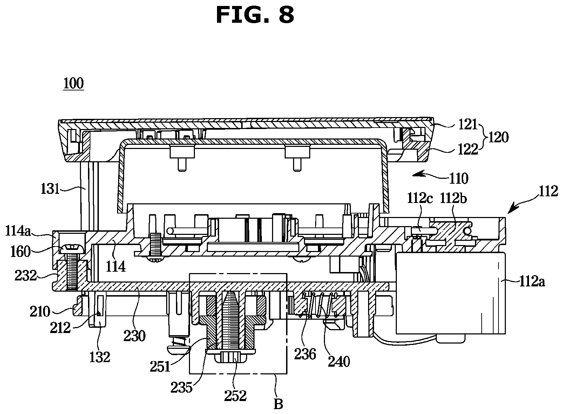

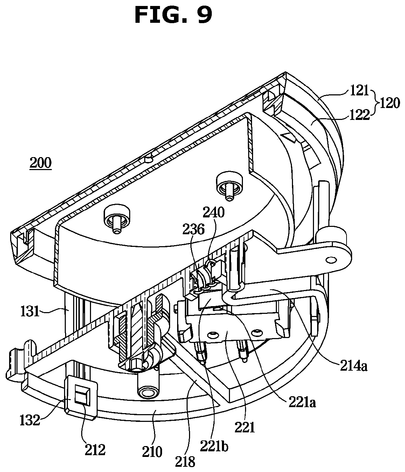

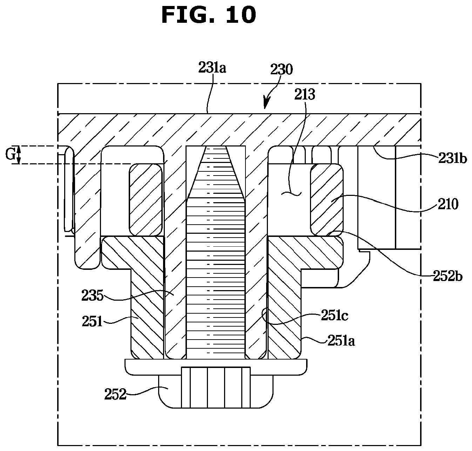

FIG. 8 is a cross-sectional view of portion A-A' of the sensor collision detector of the sensor module shown in FIG. 5, FIG. 9 is a partial perspective cross-sectional view showing the sensor collision detector according to an embodiment, and FIG. 10 is an enlarged view of portion B of FIG. 8. In the following, descriptions redundant to the above are omitted.

As shown in FIGS. 8 to 10, the sensor collision detector 200 of the sensor module 100 may include the bumper 210 movably coupled to the sensor holder 230 so as to interlock with the sensor case 120, and the detecting portion 220 interacting with the movement of the bumper 210 to detect the collision of the sensor 110. The detecting portion 220 may be configured to transmit the collision of the sensor case to the robot cleaner 1.

The bumper 210 of the sensor collision detector 200 may be movably coupled to the sensor holder 230 by the fixing member 250.

The fixing member 250 may be arranged such that the bumper 210 is movably coupled to the sensor holder 230 in horizontal and vertical directions. The fixing member 250 may include a first fixing member 251 arranged to movably support the bumper 210, and a second fixing member 252 arranged to fix the first fixing member 251 to the sensor holder 230.

The first fixing member 251 may be provided so that the bumper 210 inserted into the coupling portion 235 of the sensor holder 230 may be seated. A predetermined gap G may be provided between the bumper 210 and the sensor holder 230 to allow the bumper 210 to move in the vertical direction. The gap G may be provided between the bumper 210 and the second surface 231b of the sensor holder 230.

The first fixing member 251 may include a fixing body 251a having an insertion hole 251c arranged to be inserted into the coupling portion 235 of the sensor holder 230, and a support 251b extending outwardly from an upper end of the fixing body 251a.

The fixing body 251a of the first fixing member 251 may be formed in a cylindrical shape with open upper and lower surfaces. The fixing body 251a may have the insertion hole 251c formed at the center corresponding to the coupling portion 235 of the sensor holder 230. The support 251b may be arranged extending outwardly from an upper end of the fixed body 251a. The support 251b may be provided flat such that at least a portion of the bumper 210 may be seated and/or supported.

The bumper 210 may be inserted into the coupling portion 235 of the sensor holder 230 and seated on the support 251b of the first fixing member 251. The first fixing member 251 may be fixed to the coupling portion 235 of the sensor holder 230 via the second fixing member 252 so that the bumper 210 may have the gap G between the bumper 210 and the second surface 231b of the sensor holder 230. The second fixing member 252 may include bolts and/or screws or the like that are inserted and fixed to the coupling portion 235 of the sensor holder 230. The second fixing member 252 may be arranged to fix the fixing body 251a of the first fixing member 251 coupled to the coupling portion 235 of the sensor holder 230 to the sensor holder 230. The second fixing member 252 may include a screw having a threaded portion 252a and a head portion 252b. The threaded portion 252a of the second fixing member may be inserted into the coupling portion 235 of the sensor holder 230. The head portion 252b of the second fixing member 252 may support and fix at least one end of the fixing body 251a of the first fixing member 251 such that the at least one end of the fixing body 251a does not separate from the coupling portion 235.

The bumper 210, which is coupled to the sensor holder 230 by the first fixing member 251 and the second fixing member 252, may include the predetermined gap G between the bumper 210 and the second surface 231b of the sensor holder 230. This gap G may allow the bumper 210 to move in the upward, downward, and vertical directions.

In addition, the coupling hole 213 of the bumper 210 coupled to the sensor holder 230 may be provided in an elliptical shape to enable the bumper 210 to move in a forward and backward direction, as well as horizontally, and rotationally.

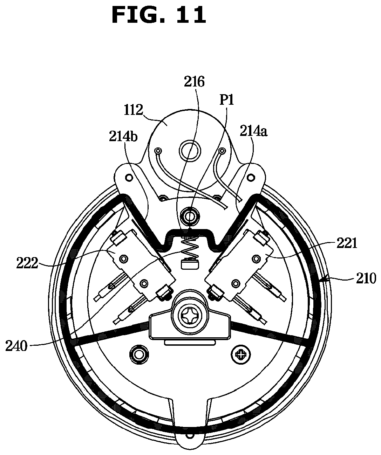

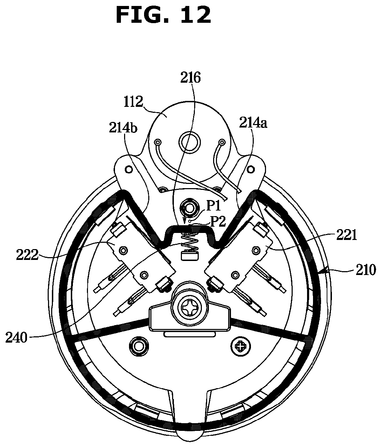

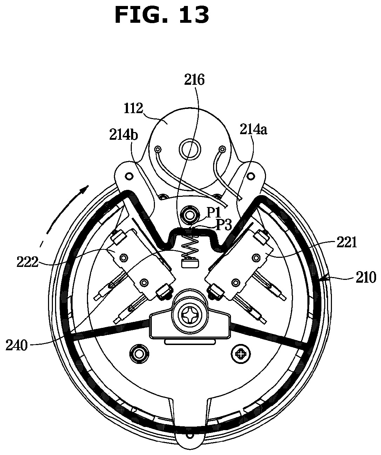

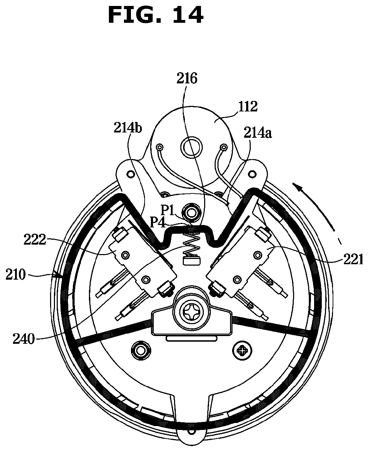

FIG. 11 is a view showing a state of the sensor collision detector before operation according to an embodiment, FIG. 12 is a view showing a state of the sensor collision detector during a frontal collision of the sensor module according to an embodiment, FIG. 13 is a view showing a state of the sensor collision detector during a left-side collision of the sensor module according to an embodiment, and FIG. 14 is a view showing a state of the sensor collision detector during a right-side collision of the sensor module according to one embodiment. In the following, descriptions redundant to the above are omitted.

Referring to FIG. 11, the sensor module 100 of the robot cleaner 1 may be configured to recognize obstacles and measure the distance while protruding from the upper side of the cleaner main body 10 when the robot cleaner 1 is travelling.

When the robot cleaner 1 is travelling, the sensor case 120 of the sensor collision detector 200 may be arranged to protrude from an upper side of the sensor installation portion 13 of the cleaner main body 10.

The sensor 110 disposed in the sensor case 120 may be rotatably supported on the sensor holder 230.

The bumper 210 may be connected to the sensor case 120 at the lower portion of the sensor 110 through the links 131. The bumper 210 may be disposed within the maximum outer diameter of the sensor 110.

The bumper 210 may be movably connected to the sensor case 120 by the links 131.

The bumper 210 may be arranged to correspond to the outer circumference of the sensor 110. The bumper 210 may include the first contact portion 214a and the second contact portion 214b, which are disposed adjacent to the first switch 221 and the second switch 222, respectively, which are spaced apart at a predetermined angle from the sensor holder 230. The first contact portion 214a and the second contact portion 214b may be arranged to contact the second terminal 221b of the first switch 221 and the second terminal 222b of the second switch 222, respectively.

The first switch 221 and the second switch 222 actuated by the bumper 210 may be connected to a controller (not shown) to transmit a collision detection to the robot cleaner 1.

The bumper 210 may be positioned in a first position P1 by the elastic member 240 that elastically supports the sensor holder 230.

Referring to FIG. 12, the bumper 210 may be moved downward (in the direction of the arrow) in the event of a frontal collision of the sensor case 120 during the travelling of the robot cleaner 1. The bumper 210 may move from the first position P1 to a second position P.

When the bumper 210 moves to the second position P2, the first contact portion 214a and the second contact portion 214b of the bumper 210 may be brought into contact with the first switch 221 and the second switch 222 to become in an ON state, and transmit the sensor collision information to the robot cleaner 1.

After receiving the sensor collision information from the switches 221 and 222, the robot cleaner 1 may move backward to avoid the obstacle.

When the robot cleaner 1 moves, the bumper 210 may be moved to the original position (the first position, P1) by the elastic member 240.

Referring to FIG. 13, the bumper 210 may move in the first direction (the arrow) in the event of a left-side collision of the sensor case 120 during the travelling of the robot cleaner 1. The bumper 210 may move from the first position P1 to a third position P3.

When the bumper 210 moves to the third position P3, the first contact portion 214a of the bumper 210 may be brought into contact with the first switch 221 and the first switch 221 may be turned on and the sensor collision information may be transmitted to the robot cleaner 1.

After receiving the sensor collision information from the first switch 221, the robot cleaner 1 may move to the other side (opposite to the arrow) to avoid the obstacle.

When the robot cleaner 1 moves to avoid the obstacle, the bumper 210 may be moved to the original first position P1.

Referring to FIG. 14, the bumper 210 may move in the second direction (the arrow) in the event of a right-side collision of the sensor case 120 during the travelling of the robot cleaner 1. The bumper 210 may move from the first position P1 to a fourth position P4.

When the bumper 210 moves to the fourth position P4, the second contact portion 214b of the bumper 210 may be brought into contact with the second switch 222 and the second switch 222 may be turned on and the sensor collision information may be transmitted to the robot cleaner 1.

After receiving the sensor collision information from the second switch 222, the robot cleaner 1 may move to the other side (opposite to the arrow) to avoid the obstacle.

When the robot cleaner 1 moves to avoid the obstacle, the bumper 210 may be moved to the original first position P1.

In this way, the detection of collisions between the sensor 110 and the sensor case 120 and the obstacles during the movement of the robot cleaner 1 may allow a three-dimensional understanding of the distribution of the obstacles, and based on this, an appropriate form of avoidance or overcoming of the obstacles may be performed.

Furthermore, the robot cleaner 1 may accurately determine the distance to the obstacles as well as the distribution of the obstacles within the cleaning area.

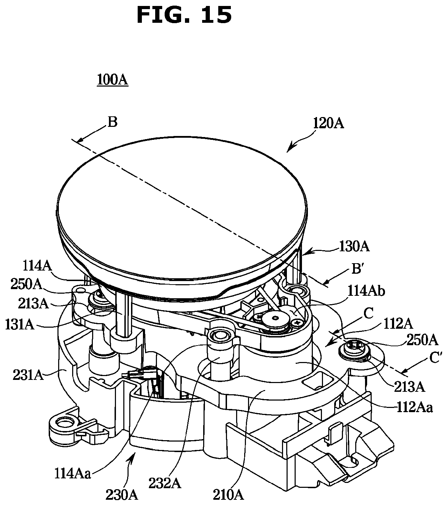

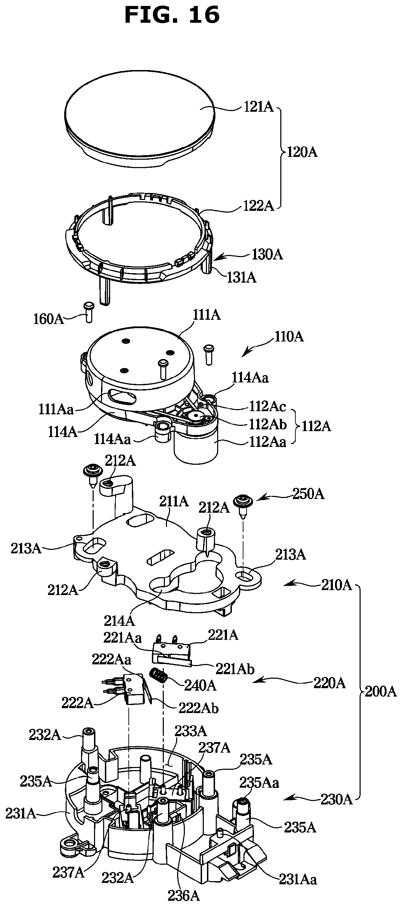

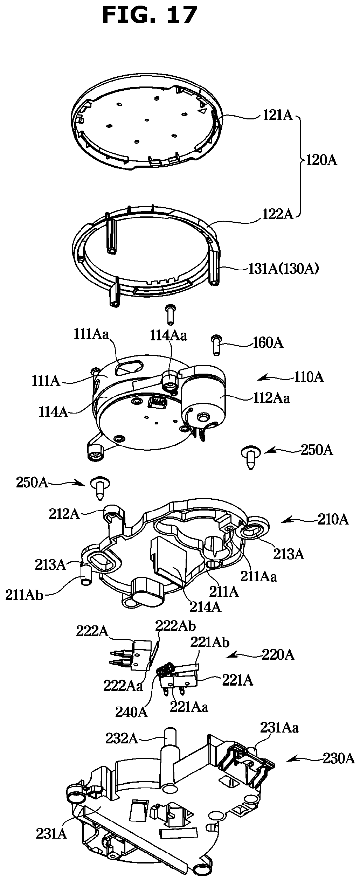

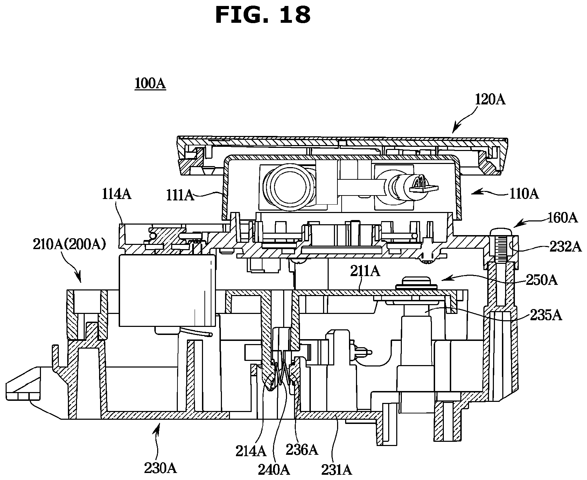

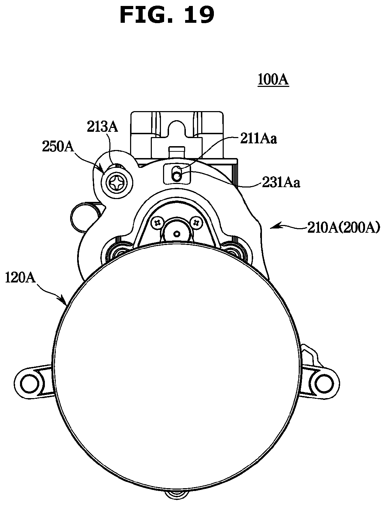

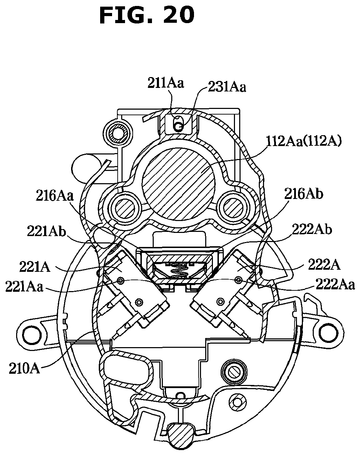

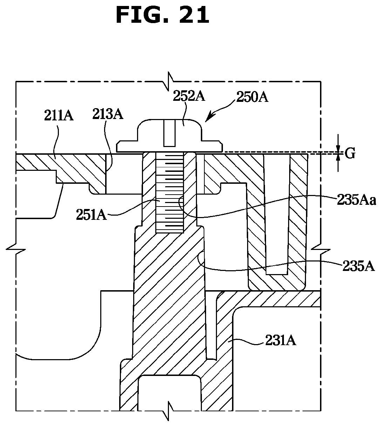

FIG. 15 is a perspective view showing a sensor module equipped with a sensor collision detector according to another embodiment, FIG. 16 is an exploded perspective view showing the sensor module equipped with the sensor collision detector shown in FIG. 15, FIG. 17 is an exploded perspective view showing the sensor module equipped with the sensor collision detector shown in FIG. 15 from the below, FIG. 18 is a cross-sectional view of portion B-B' of the sensor collision detector shown in FIG. 15, FIG. 19 is a view showing the sensor module equipped with the sensor collision detector shown in FIG. 15, FIG. 20 is a partial cross-sectional view schematically showing a detecting portion of the sensor collision detector shown in FIG. 15, and FIG. 21 is a cross-sectional view of portion C - C' of the sensor collision detector shown in FIG. 15. Reference numerals not shown may refer to FIGS. 1 to 14.

As shown in FIGS. 15 to 21, a sensor module 100A may include a sensor collision detector 200A.

The sensor module 100A may include a sensor 110A and a sensor case 120A provided to cover the sensor 110A. The sensor 110A may be formed in a cylindrical shape. The sensor 110A may emit light and receive light returning from the emitted light hitting the obstacle, thereby obtaining obstacle situation information, such as the location of the obstacle and the distance to the obstacle. The obstacle situation information obtained in this way may be reflected in the movement of the robot cleaner 1.

The sensor 110A may include a sensor body 111A having a cylindrical shape and a sensing portion (not shown) provided inside the sensor body 111A. At least a portion of the sensor body 111A may be provided with a sensing opening 111Aa to allow the light emitted from the sensor 110A and light returning after hitting the obstacle to pass through smoothly. At least one sensing opening 111Aa may be formed on the outer circumferential surface of the sensor body 111A. The sensing opening 111Aa may be formed to be open along the circumferential direction.

The sensor module 100A may further include a drive portion 112A for making the sensor 110A rotatable. The drive portion 112A may include a motor 112Aa and a belt 112Ac connected to a motor shaft 112Ab to rotate the sensor 110A.

The sensor 110A may include a sensor bracket 114A provided to accommodate a lower portion of the sensor body 111A. The sensor bracket 114A may be arranged to rotatably couple the sensor 110A. One side of the sensor bracket 114A may be provided with a drive installation portion 114Ab for installing the drive portion 112A.

The sensor bracket 114A may be provided with a holder body fixing portion 114Aa to allow the sensor 110A to be supported on a sensor holder 230A of the sensor collision detector 200A, which will be described later. The holder body fixing portion 114Aa may be formed to protrude downwardly from the sensor bracket 114A. The holder body fixing portion 114Aa may be formed to extend from at least a portion of the sensor bracket 114A.

The drive installation portion 114Ab may be configured to allow the motor 112Aa and the belt 112Ac connected to the motor shaft 112Ab to be connected to the sensor 110A. In the present embodiment, the drive installation portion is shown as an example of being disposed on an outer side of the sensor body, but the present disclosure is not limited thereto. For example, a drive portion provided to rotate the sensor may be disposed on an inner side of the sensor body and/or the sensor bracket.

The sensor 110A may be covered by sensor case 120A. The sensor 110A may be located on an inner side of the sensor case 120A.

The sensor case 120A may include a first sensor case 121A covering an upper portion of the sensor 110A, and a second sensor case 122A coupled to the first sensor case 121A. The first sensor case 121A may be provided in a plate shape to cover an upper surface of the sensor 110A. The second sensor case 122A may be provided in a ring shape to be coupled to the first sensor case 121A.

The second sensor case (hereinafter referred to as the sensor case) may be provided with a link member 130A for connecting the sensor collision detector 200A and the sensor case 120A described later.

The sensor collision detector 200A may be disposed on a lower portion of the sensor 110A. The sensor collision detector 200A may be connected to the sensor case 120A via the link member 130A. The link member 130A may be configured to extend integrally with the sensor case 120A. When the sensor case 120A collides with an obstacle, the sensor collision detector 200A may detect the collision via the link member 130A.

The link member 130A may include at least one or more links 131A. The links 131A may be provided integrally with the case 120A. The links 131A may be arranged to connect the case 120A and the sensor collision detector 200A.

The sensor collision detector 200A may include a bumper 210A, a detecting portion 220A that interacts with the bumper 210A to detect a collision of the sensor 110A, and a sensor holder 230A provided to support the sensor 110A.

The sensor holder 230A may be arranged to support the sensor 110A. The sensor holder 230A may be formed to correspond to the sensor 110A.

The sensor holder 230A may include a holder body 231A having a cylindrical shape with an open upper surface. The holder body 231 may be provided with a bracket fixing portion 232A protruding upward to allow the sensor bracket 114A to be coupled thereto.

The bracket fixing portion 232A may be arranged to correspond to the holder body fixing portion 114Aa of the sensor bracket 114A. The sensor bracket 114A may be fixed to the sensor holder 230A through the bracket fixing portions 232A and the holder body fixing portions 114Aa, so that the sensor holder 230A may support the sensor 110A. The sensor bracket 114A and the sensor holder 230A may be coupled by bolts 160A or the like.

The sensor holder 230A may further include a detecting portion bolts 160A arranged to accommodate the detecting portion 220A. The bumper 210A and the detecting portion 220A may be installed in the sensor holder 230A.

The sensor holder 230A may further include a coupling portion 235A for coupling with the bumper 210A. The sensor holder 230A may further include an elastic member installation portion 236A and a switch installation portion 237A.

A fixing member 250A provided to movably install the bumper 210A may be coupled to the coupling portion 235A of the sensor holder 230A. The specific configuration of the fixing member 250A will be described later.

The sensor collision detector 200A may further include the bumper 210A. The bumper 210A may be provided to actuate the detecting portion 220A in conjunction with the sensor case 120A when the sensor 110A and the sensor case 120A covering the sensor 110A collide with an obstacle during the travelling of the robot cleaner 1.

The bumper 210A may be movably connected relative to the sensor case 120A. The bumper 210A may be formed to approximately correspond to an outer circumference of the sensor case 120A. The bumper 210A may be formed in an approximately plate shape. The bumper 210A may be arranged to be disposed within the maximum outer diameter of the sensor 110A. The bumper 210A may be disposed on a lower side of the sensor 110A and an upper side of the sensor holder 230A. The bumper 210A may be arranged to be disposed within the maximum outer diameter of the sensor holder 230A.

The bumper 210A may include bumper body 211A. At least a portion of the bumper body 211A may be formed to be curved and arranged to be disposed within the maximum outer diameter of the sensor 110A.

The bumper 210A may be connected to the sensor case 120A via the link member 130A. The bumper 210A may include link connection portions 212As to which the links 131A of the link member 130A are connected. The link connection portions 212A may be arranged to correspond to the number of links 131A. The link connection portions 212A may be formed to protrude upwardly from the bumper 210A. The link connection portions 212A may be formed integrally with the bumper body 211A. The link connection portions 212A may interlockably couple the bumper 210A with the sensor case 120A.

The bumper 210A may be provided with a drive installation portion 215A formed by cutting at least a portion of the sensor 110A to allow the motor 112Aa of the sensor 110A to be installed therethrough. The drive installation portion 215A may be formed on one side of the bumper body 211A at a position corresponding to the motor 112Aa of the sensor 110A.

The bumper 210A may further include a coupling hole 213A arranged to be coupled to the sensor holder 230A. The bumper 210A may include the coupling hole 213A for movably coupled to the sensor holder 230A. The coupling hole 213A may be formed on an outer edge. The coupling hole 213A may be formed by cutting at least a portion of the outer edge of the bumper body 211A. The coupling hole 213A may be arranged to correspond to the coupling portion 235A of the sensor holder 230A. The coupling hole 213A may be provided in a rectangular shape to allow the bumper 210A to move. The coupling hole 213A may be formed in an elliptical shape.

The bumper 210A may include a bumper body support portion 211Ab extending downwardly from the bumper body 211A. The bumper body support portion 211Ab may be arranged to stably support the bumper 210A on the sensor holder 230A. The bumper body support portion 211Ab may be arranged to be supported on at least a portion of the holder body 231A.

The bumper 210A may further include a bumper guide groove 211Aa formed on a lower surface of the bumper body 211A. The bumper guide groove 211Aa may be formed in a rectangular shape to guide the movement of the bumper 210A. The holder body 231A of the sensor holder 230A may be provided with a bumper guide 231Aa corresponding to the bumper guide groove 211Aa of the bumper 210A. The bumper guide 231Aa may be formed to protrude from an upper surface of the holder body 230A.

The bumper 210A may further include an elastic support portion 214A to support an elastic member 240A. The elastic support portion 214A of the bumper 210A may be provided to extend downwardly from a lower surface of the bumper body 211A. The elastic support portion 214A of the bumper 210A may be provided in a position corresponding to the elastic member installation portion 214A of the sensor holder 230A.

The elastic support portion 214A arranged on the bumper 210A may be arranged between a first switch 221A and a second switch 222 of the detecting portion 220A, which will be described later, to detect a collision between the sensor case 120A and an obstacle and transmit the detected information to the robot cleaner 1.

The bumper 210A may further include a contact portion 216A provided to contact the first switch 221A and the second switch 222A. The contact portion 216A may be formed to extend integrally with the elastic support portion 214A.

The sensor collision detector 200A may further include the elastic member 240A that provides tension to return the bumper 210A displaced by the collision between the sensor case 120A and the obstacle to its original position. The elastic member 240A may include a spring.

The elastic member 240A may be installed in the elastic member installation portion 236A of the sensor holder 230A. The elastic member 240A may be arranged to fit into the elastic member installation portion 236A on one side and elastically support the bumper 210A on the other side. The elastic member 240A may be arranged to elastically support between the sensor holder 230A and the bumper 210A so that the sensor case 120A and the bumper 210A may move and return to their original positions after colliding with an obstacle.

The sensor collision detector 200A may further include the detecting portion 220A arranged to interact with the bumper 210A.

The detecting portion 220A may include the first switch 221A and the second switch 222A arranged to face each other and spaced apart from each other at a predetermined angle so as to be in contact with at least a portion of the bumper 210A. The first switch 221A and the second switch 222A may have first terminals 221Aa and 222Aa and second terminals 221Ab and 222Ab, respectively, on opposing surfaces facing each other and contactable with each other.

The contact portion 216A of the bumper 210A may be arranged to correspond to the first switch 221A and the second switch 222A of the detecting portion 220A, respectively. In particular, the contact portion 216A may include a first contact portion 216Aa and a second contact portion 216Ab that are arranged to correspond to the first switch 221A and the second switch 222A, respectively. The first contact portion 216Aa may be arranged to correspond to the first switch 221A. The second contact portion 216Ab may be arranged to correspond to the second switch 222A. The first contact portion 216Aa may be arranged to contact and/or press the second terminal 221Ab of the first switch 221A. The second contact portion 216Ab may be arranged to contact and/or press the second terminal 222Ab of the second switch 222A.

The bumper 210A of the sensor collision detector 200A may be movably coupled to the sensor holder 230 by a fixing member 250A.

As shown in FIG. 21, the bumper 210A may be arranged to be movably coupled to the sensor holder 230A in the horizontal and vertical directions.

The bumper 210A may be movably coupled to the fixing member 250A and the sensor holder 230A in the horizontal and vertical directions.

The fixing member 250A may include a screw including a threaded portion 251A and a head portion 252A. The threaded portion 251A of the fixing member 250A may be inserted into the coupling portion 235A of the sensor holder 230A. The head portion 252A of the fixing member 250A may be formed to have a larger diameter than the threaded portion 251A.

A coupling groove 235Aa for coupling the fixing member 250A may be formed in the coupling portion 235A of the sensor holder 230A. The threaded portion 251A may be coupled to the coupling groove 235Aa.

A gap G may be formed between the bumper 210A and the sensor holder 230A to allow the bumper 210A to move in the vertical direction. The fixing member 250A may be coupled to the bumper 210A and the sensor holder 230A such that the gap G is formed between the bumper 210A and the sensor holder 230A. The head portion 252A of the fixing member 250A may be coupled to the coupling hole 213A of the bumper 210A such that the gap G is provided therebetween.

This gap G may allow the bumper 210A to move in the vertical direction relative to the sensor holder 230A.

In addition, the coupling hole 213A of the bumper 210A may be formed in a rectangular elliptical shape to allow the bumper 210A to be moved vertically, horizontally, and rotationally relative to the sensor holder 230A.

While the present disclosure has been particularly described with reference to exemplary embodiments, it should be understood by those of skilled in the art that various changes in form and details may be made without departing from the spirit and scope of the present disclosure.

## Claims

1. A robot cleaner comprising;
a cleaner main body configured to travel and clean a cleaning area;
a sensor case disposed on the cleaner main body and configured to cover a sensor for detecting an obstacle in the cleaning area; and
a sensor collision detector configured to detect an impact applied to the sensor;
wherein the sensor collision detector comprises:
a bumper movably connected to the sensor case, at least a portion of the bumper corresponding to an outer circumference of the sensor,
a detecting portion interacting with the bumper to detect a collision of the sensor case, and
wherein the bumper and the detecting portion are disposed on a lower side of the sensor.

2. The robot cleaner of claim 1, wherein the sensor collision detector further includes a sensor holder to support the sensor, and
wherein the bumper and the detecting portion are on a lower surface of the sensor holder.

3. The robot cleaner of claim 2, wherein the bumper and the detecting portion are arranged in the same line on a lower portion of the sensor holder.

4. The robot cleaner of claim 2, wherein the sensor collision detector further comprises a link member connecting the sensor case and the bumper such that the sensor case and the bumper are interlocked with each other in the event of a collision with an obstacle, and
the link member includes at least one link arranged to be spaced apart in a circumferential direction of the sensor case.

5. The robot cleaner of claim 4, wherein the sensor collision detector further comprises:
a bumper connection portion disposed on the link so as to connect the bumper, and
a link connection portion disposed on the bumper so as to correspond to the bumper connection portion.

6. The robot cleaner of claim 2, wherein the sensor collision detector further comprises an elastic member that provides tension to allow the bumper to return to its original position.

7. The robot cleaner of claim 6, wherein the detecting portion includes a pair of a first switch and a second switch arranged to face each other and spaced apart from each other at a predetermined angle so as to be in contact with at least a portion of the bumper, the first switch and the second switch having first and second terminals, respectively, on opposite surfaces facing each other and contactable with each other.

8. The robot cleaner of claim 7, wherein the bumper includes:
a bumper body formed to correspond to an outer circumference of the sensor case, and
a contact portion, as at least a portion of the bumper body, between the first switch and the second switch, and configured to contact each first terminal by pressing each second terminal.

9. The robot cleaner of claim 8, wherein the sensor collision detector further comprises a fixing member configured to be movably coupled to the sensor holder,
wherein the fixing member includes a first fixing member on which the bumper is seated, and a second fixing member securing the first fixing member to the sensor holder.

10. The robot cleaner of claim 9, wherein a gap is disposed between the bumper and the lower surface of the sensor holder.

11. The robot cleaner of claim 10, wherein the sensor holder further comprises a coupling portion on the lower surface of the sensor holder to allow the fixing member to be coupled to the sensor holder,
wherein the coupling portion includes:
a coupling protrusion to couple the bumper and the first fixing member, and
a coupling groove formed on the coupling protrusion to enable the second fixing member to be coupled thereto.

12. The robot cleaner of claim 11, wherein the bumper further comprises a coupling hole formed corresponding to the coupling portion to enable the fixing member to be coupled thereto, and
the coupling hole is formed in an elliptical shape.

13. The robot cleaner of claim 11, wherein the sensor holder further comprises an elastic member installation portion on the lower surface of the sensor holder to allow the elastic member to be coupled thereto.

14. The robot cleaner of claim 13, wherein the bumper further comprises an elastic member support portion arranged to be spaced apart from the elastic member installation portion to support the elastic member.
